# EUROPÄISCHE PATENTSCHRIFT

(11) **EP 3 802 271 B1**
(45) Veröffentlichungstag und Bekanntmachung des Hinweises auf die Patenterteilung: **16.07.2025**
(21) Anmeldenummer: 18732261.5
(22) Anmeldetag: 01.06.2018
(51) Int. Cl.: B62B 1/12, B62B 1/14, B62B 1/00, B62B 1/26, B62B 5/06

(54) **BEFÖRDERUNGSVORRICHTUNG UND BEFÖRDERUNGSFAHRZEUG**
TRANSPORT DEVICE AND TRANSPORT VEHICLE
VÉHICULE DE TRANSPORT ET DISPOSITIF DE TRANSPORT

(43) Veröffentlichungstag der Anmeldung: 14.04.2021
(73) Patentinhaber: TANOS GmbH Verpacken Ordnen Präsentieren, 89257 Illertissen (DE)
(72) Erfinder: WOLLE, Lutz, 89233 Burlafingen (DE); GERBRANDA, Tjeerd Jan Pieter, 89340 Leipheim (NL); TRAAS, Tim, 4451 TV Heinkenszand (NL)
(74) Vertreter: Patentanwälte Magenbauer & Kollegen Partnerschaft mbB
(86) Internationale Anmeldenummer: PCT/EP2018/064488
(87) Internationale Veröffentlichungsnummer: WO 2019/228649

(56) Entgegenhaltungen:
- WO-A1-2011/000385
- AU-A4- 2010 101 263
- DE-A1- 10 155 588
- US-A1- 2010 253 025
- US-B1- 6 386 557
- US-B1- 6 719 305
- US-B1- 7 367 571
- US-B1- 8 783 710

## Beschreibung

Die Erfindung betrifft eine Beförderungsvorrichtung mit einem Beförderungsfahrzeug und einem vertikalen Stapel von aneinander gekoppelten kastenförmigen Behältern.

Das Beförderungsfahrzeug umfasst:
- einen Fahrzeugkörper mit einem Unterteil und einem sich von der Oberseite des Unterteils nach oben erstreckenden vertikalen Gestellabschnitt, wobei das Unterteil über eine Stellfläche und eine Behälter-Befestigungsschnittstelle verfügt, mit der der auf der Stellfläche abgestellte vertikale Stapel mit seinem untersten kastenförmigen Behälter an dem Unterteil befestigbar ist,
- einen am Fahrzeugkörper angeordneten Griff, mit dem das Beförderungsfahrzeug in eine Kippstellung versetzbar ist, und
- zwei am Unterteil angeordnete Räder, mit denen das Beförderungsfahrzeug in der Kippstellung gegenüber einem Boden abgestützt und relativ zum Boden bewegt werden kann.

Ein solches Beförderungsfahrzeug ist aus dem Stand der Technik bekannt. So ist als Beförderungsfahrzeug zur Beförderung von kastenförmigen Behältern beispielsweise das von der Firma TANOS GmbH erhältliche Produkt "Sys-Roll" bekannt.

Das eingangs genannte Beförderungsfahrzeug wird typischerweise dazu eingesetzt, ein oder mehrere kastenförmige Behälter zu einem Einsatzort, beispielsweise einer Baustelle, zu transportieren. In dem kastenförmigen Behälter wird in der Regel Werkzeug, beispielsweise ein Elektrowerkzeug, und/oder Werkzeugzubehör aufbewahrt. Die kastenförmigen Behälter sind insbesondere derart ausgestaltet, dass sie aufeinander gestapelt und vertikal zugfest aneinander gekoppelt werden können, um einen stabilen vertikalen, insbesondere quaderförmigen, Stapel zu bilden. Zu diesem Zweck verfügen die kastenförmigen Behälter jeweils über den gleichen horizontalen Grundriss sowie über Kopplungsmittel, mit denen sie aneinander gekoppelt werden können. Der Stapel kann mit dem untersten kastenförmigen Behälter auf der Stellfläche des Beförderungsfahrzeugs platziert und mittels der Behälter-Befestigungsschnittstelle befestigt werden. Zweckmäßigerweise wird der Stapel nur mit dem untersten Behälter am Beförderungsfahrzeug befestigt. Der Fahrzeugkörper, insbesondere der vertikale Gestellabschnitt, stellt eine dauerhaft integere Struktur dar; d.h. der Fahrzeugkörper, insbesondere der vertikale Gestellabschnitt, bleibt in seinem Aufbau bei der Anbringung und Abnahme eines kastenförmigen Behälters unverändert. Der kastenförmige Behälter ist zweckmäßigerweise werkzeuglos von dem Beförderungsfahrzeug abnehmbar und/oder an diesem anbringbar.

Das Beförderungsfahrzeug kann manuell in eine Kippstellung versetzt werden, bei der das Beförderungsfahrzeug um eine durch die Räder definierte Kippachse gegenüber dem Boden verkippt ist. In diesem Zustand kann das Beförderungsfahrzeug in der Art einer Sackkarre bewegt, insbesondere geschoben oder gezogen werden. Das Beförderungsfahrzeug kann auch als "sacckarrenartig" bzw. als Sackkarre bezeichnet werden.

Eine Kombination aus dem Beförderungsfahrzeug und dem damit zu befördernden Beförderungsgut, beispielsweise dem genannten kastenförmigen Behälter, soll als die Beförderungsvorrichtung bezeichnet werden.

Die US 7,367,571 B1 beschreibt einen Werkzeugmaschinenstand und/oder Werkbank, Steckdosenpanel, Lichtversorgung und modulares Taskboxensystem, kombiniert in einem integrierten System.

Die US 6,386,557 B1 beschreibt einen tragbaren Kühler-Caddy mit einem Becherhalterpanel.

Eine Aufgabe der Erfindung besteht darin, die Beförderungsvorrichtung unter Beibehaltung ihres kompakten und einfachen Aufbaus mit einer weiteren Funktion auszustatten.

Die Aufgabe wird gelöst durch eine Beförderungsvorrichtung gemäß Anspruch 1. Das Unterteil der Beförderungsvorrichtung weist an seiner Unterseite mehrere Standfüße auf, auf denen das Beförderungsfahrzeug in einer aufrechten Stellung steht.

Die Beförderungsvorrichtung kann folglich in einer aufrechten Stellung stabil auf dem Boden abgestellt werden und bleibt an der abgestellten Stelle stehen. Die Beförderungsvorrichtung kann somit eine zumindest temporär stationäre Arbeitsstation bilden, mit der am Einsatzort verschiedene Arbeiten durchgeführt werden können.

Das Unterteil verfügt an seiner Unterseite über mehrere Standfüße und das Beförderungsfahrzeug ist ausgebildet, sich in einer aufrechten Stellung mit den Standfüßen und nicht mit den Rädern gegenüber dem Boden abzustützen, wobei
das Unterteil in einem rückwärtigen Bereich eine erste Befestigungseinrichtung einer Arbeitstisch-Befestigungsschnittstelle umfasst, mit der ein länglicher Arbeitstisch in vertikaler Ausrichtung an dem Beförderungsfahrzeug anbringbar ist, wobei die erste Befestigungseinrichtung einen Schlitz und eine über den Schlitz zugängliche Befestigungsstruktur aufweist.

Wie nachstehend erläutert, kann die Beförderungsvorrichtung beispielsweise dazu dienen, einen Arbeitstisch in einer horizontalen Arbeitsstellung abzustützen. Ferner kann die Beförderungsvorrichtung über einen integrierten Tisch verfügen, an dem Arbeiten durchgeführt werden können. Das für die Arbeiten benötigte Werkzeug und/oder Zubehör wird insbesondere in den kastenförmigen Behältern bereitgestellt. Die Beförderungsvorrichtung dient somit nicht nur der Beförderung der kastenförmigen Behälter, sondern kann zudem auch als temporär stationäre Arbeitsstation oder Teil einer temporär stationären Arbeitsstation eingesetzt werden.

Vorteilhafte Weiterbildungen sind Gegenstand der Unteransprüche.

Exemplarische Details und Ausführungsformen werden nachstehend unter Bezugnahme auf die Figuren erläutert. Dabei zeigt:
- Figur 1: eine Beförderungsvorrichtung,
- Figur 2: ein Unterteil in einer perspektivischen Ansicht von oben,
- Figur 3: das Unterteil in einer perspektivischen Ansicht von unten,
- Figur 4: ein Beförderungsfahrzeug in einer perspektivischen Ansicht von oben,
- Figur 5: das Beförderungsfahrzeug in einer perspektivischen Ansicht von unten,
- Figur 6: das Beförderungsfahrzeug mit einer Auszugsanordnung,
- Figur 7: das Beförderungsfahrzeug mit einem eingesetzten Zusatzbehälter,
- Figur 8: das Beförderungsfahrzeug in einer Rückansicht,
- Figur 9: die Beförderungsvorrichtung in einer Rückansicht,
- Figur 10: eine Befestigungseinrichtung in einer Detailansicht,
- Figur 11: die Beförderungsvorrichtung in einer perspektivischen Ansicht von oben,
- Figur 12: die Befestigungseinrichtung in einer Detailansicht,
- Figur 13: die Befestigungseinrichtung in einer Schnittansicht,
- Figur 14: die Beförderungsvorrichtung in einer Arbeitskonfiguration in einer perspektivischen Ansicht von oben, und
- Figur 15: die Beförderungsvorrichtung in der Arbeitskonfiguration in einer perspektivischen Ansicht von unten,
- Figur 16: einen kastenförmigen Behälter,
- Figur 17: eine Schnittansicht eines am Unterteil befestigten kastenförmigen Behälters und
- Figur 18: einen auf dem Unterteil abgestellten kastenförmigen Behälter.

Bei den nachfolgenden Erläuterungen wird auf die in den Figuren eingezeichnete x-Richtung, y-Richtung und z-Richtung Bezug genommen. Die x-Richtung, y-Richtung und z-Richtung sind orthogonal zueinander ausgerichtet. Die x-Richtung kann auch als Querrichtung, die y-Richtung auch als Längsrichtung und die z-Richtung auch als Vertikalrichtung bezeichnet werden. Ferner können die x-Richtung und die y-Richtung auch als horizontale Richtungen bezeichnet werden. Das Bezugssystem für die Richtungen ist das Beförderungsfahrzeug 2 bzw. die Beförderungsvorrichtung 1 in einer aufrechten Stellung.

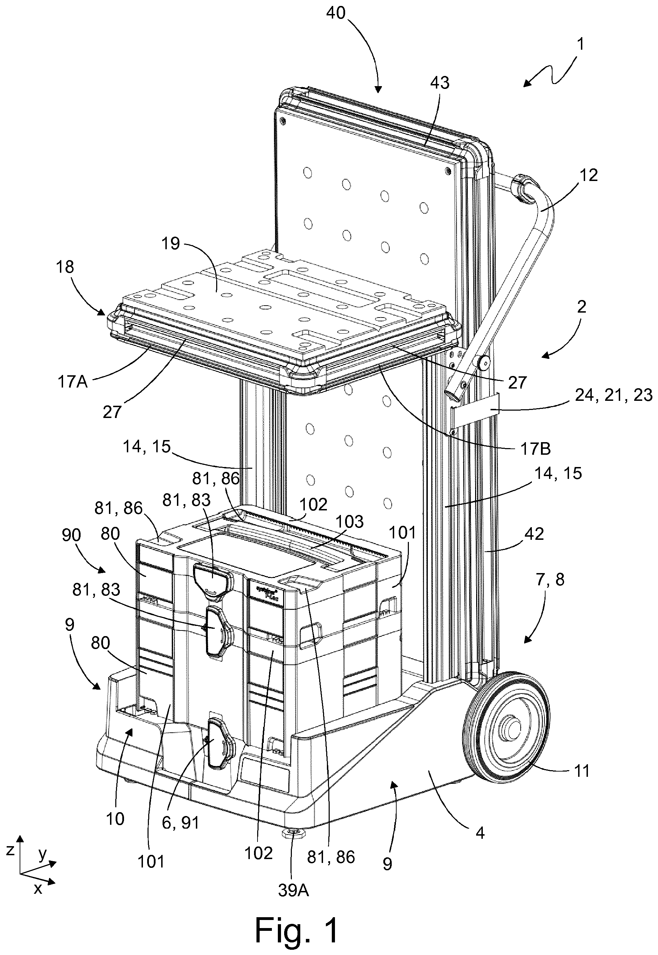

Die Figur 1 zeigt eine Beförderungsvorrichtung 1 mit einem Beförderungsfahrzeug 2 und einem vertikalen Stapel 90 von aneinander gekoppelten kastenförmigen Behältern 80.

Das Beförderungsfahrzeug 2 umfasst einen Fahrzeugkörper mit einem Unterteil 4 und einem sich von der Oberseite des Unterteils 4 nach oben erstreckenden vertikalen Gestellabschnitt 14. Das Unterteil 4 verfügt über eine Stellfläche 5 und eine Behälter-Befestigungsschnittstelle 6. Mit der Behälter-Befestigungsschnittstelle 6 ist der auf der Stellfläche 5 abgestellte vertikale Stapel 90 mit seinem untersten kastenförmigen Behälter 80 an dem Unterteil 4 befestigt.

Das Beförderungsfahrzeug 2 umfasst ferner einen am Fahrzeugkörper angeordneten Griff 12, mit dem das Beförderungsfahrzeug 2 in eine Kippstellung versetzbar ist. Ferner umfasst das Beförderungsfahrzeug 2 zwei am Unterteil 4 angeordnete Räder 11, mit denen das Beförderungsfahrzeug 2 in der Kippstellung gegenüber einem Boden abgestützt und relativ zum Boden bewegt werden kann.

Das Unterteil 4 weist an seiner Unterseite wenigstens einen Standfuß 39, 39A auf, auf dem das Beförderungsfahrzeug 2 in einer aufrechten Stellung steht.

Nachstehend werden weitere exemplarische Details erläutert.

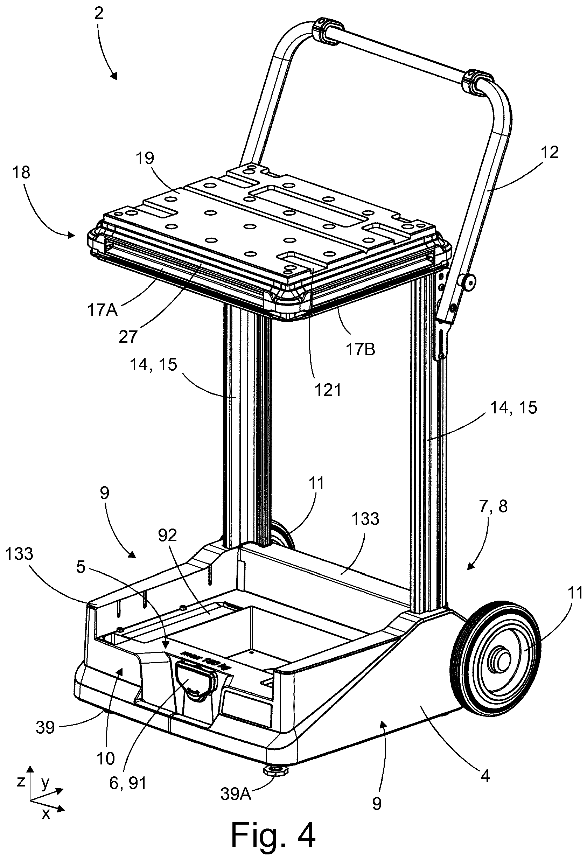

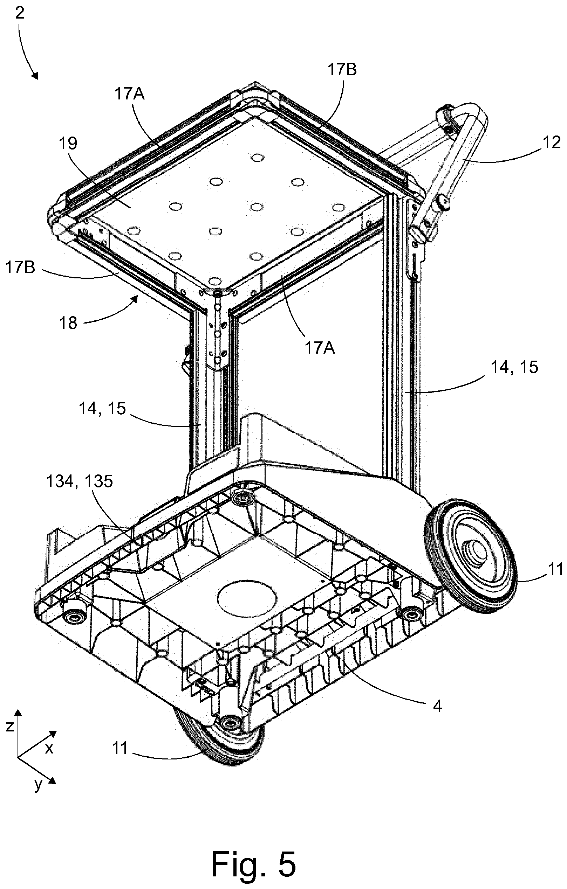

Zunächst zum Grundaufbau des Beförderungsfahrzeugs 2:
Das Beförderungsfahrzeug 2 ist für sich genommen - also ohne die kastenförmigen Behälter 80 - in den Figuren 4 und 5 gezeigt und weist eine querseitige Vorderseite 10, zwei Längsseiten 9 und eine querseitige Rückseite 8 auf.

Das Beförderungsfahrzeug 2 kann eine Standstellung einnehmen, in der es stabil auf dem Boden steht. In der Standstellung ist das Unterteil 4 parallel zum Boden ausgerichtet und der vertikale Gestellabschnitt 14 ist senkrecht zum Boden ausgerichtet. Das Beförderungsfahrzeug 2 kann ferner eine Fahrstellung einnehmen, in der es relativ zum Boden verkippt ist, beispielsweise um ca. 45 Grad. In der Fahrstellung lässt sich das Beförderungsfahrzeug 2 durch manuelles Schieben oder Ziehen in Bewegung versetzen. Das Beförderungsfahrzeug 2 lässt sich folglich wie eine Sackkarre handhaben und kann auch als sackkarrenartig bezeichnet werden.

Der exemplarisch aus dem Unterteil 4, dem vertikalen Gestellabschnitt 14 und einem integrierten Tisch 18 bestehende Fahrzeugkörper hat in einer y-z-Seitenansicht im Wesentlichen die Form eines um 90 Grad gedrehten U bzw. die Form eines C. Das Unterteil 4 und der integrierte Tisch 18 stellen in einer y-z-Seitenansicht jeweils horizontale Schenkel dar, die durch den vertikalen Gestellabschnitt 14, zweckmäßigerweise nur durch den vertikalen Gestellabschnitt 14, verbunden sind.

Das Unterteil 4 und der vertikale Gestellabschnitt 14 bilden zusammen (ohne den Griff 12) in einer y-z-Seitenansicht eine im Wesentlichen L-förmige Struktur.

Die Erstreckung des vertikalen Gestellabschnitts 14 in z-Richtung ist größer als die Erstreckung des Unterteils 4 in y-Richtung und größer als die Erstreckung des integrierten Tischs 18 in y-Richtung. Die y-Erstreckung des Unterteils 4 entspricht der y-Erstreckung des integrierten Tischs 18. Der vertikale Gestellabschnitt 14 nimmt vorzugsweise wenigstens 60%, insbesondere wenigstens 70% der z-Erstreckung des Fahrzeugkörpers oder des Beförderungsfahrzeugs 2 ohne den Griff 12 ein.

Der vertikale Gestellabschnitt 14 ist in dem rückwärtigen Bereich 7 des Beförderungsfahrzeugs 2 angeordnet. Zweckmäßigerweise ist der integrierte Tisch 18 gegenüber dem Unterteil 4 nur durch den im rückwärtigen Bereich 7 angeordneten vertikalen Gestellabschnitt 14 abgestützt. Zwischen dem integrierten Tisch 18 und dem Unterteil 4 befindet sich somit in y-Richtung vor dem vertikalen Gestellabschnitt 14 ein vollständig freies Volumen zur Aufnahme eines oder mehrerer kastenförmiger Behälter 80. Bis auf den im rückwärtigen Bereich 7 angeordneten Gestellabschnitt 14 ist das zwischen dem integrierten Tisch 18 und dem Unterteil 4 vorhandene Volumen vorzugsweise vollständig frei.

Der das Unterteil 4, den vertikalen Gestellabschnitt 14 und den integrierten Tisch 18 umfassende Fahrzeugkörper stellt vorzugsweise eine dauerhaft integere Struktur dar, die bei der Abnahme und/oder Anbringung eines kastenförmigen Behälters 80 an der Behälter-Befestigungsschnittstelle 6 unverändert bleibt. Ein Umbau des Fahrzeugkörpers, insbesondere des vertikalen Gestellabschnitts 14 und/oder des integrierten Tischs 18 ist zur Abnahme und/oder Anbringung des kastenförmigen Behälters 80 an der Behälter-Befestigungsschnittstelle 6 nicht erforderlich. Zweckmäßigerweise können der integrierte Tisch 18 und/oder der vertikale Gestellabschnitt 14 nicht werkzeuglos vom Fahrzeugkörper abgenommen werden.

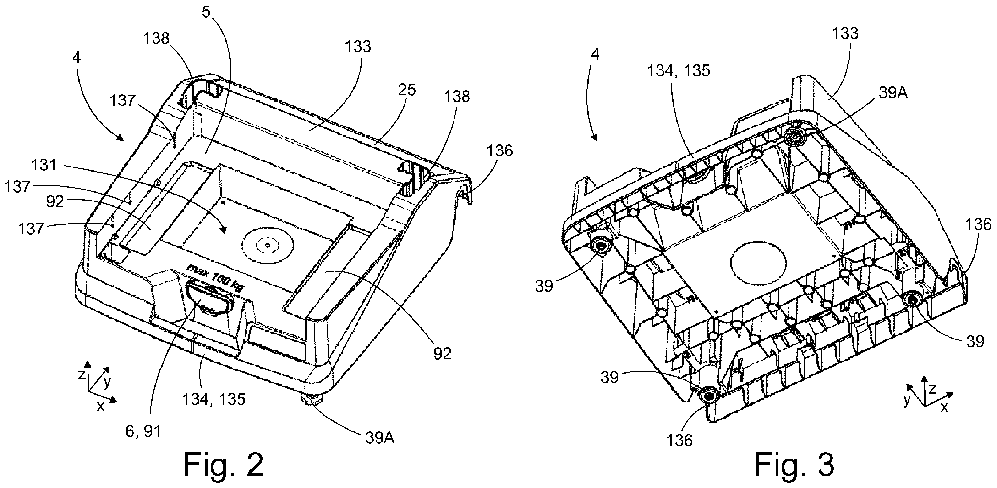

Die Figuren 2 und 3 zeigen das Unterteil 4. Das Unterteil 4 weist eine im Wesentlichen quaderförmige, insbesondere flache Grundgestalt auf. Die y-Erstreckung und die x-Erstreckung des Unterteils 4 sind jeweils wenigstens doppelt so groß wie die z-Erstreckung des Unterteils 4.

Das Unterteil 4 umfasst exemplarisch einen als Spritzgussteil gefertigten, vorzugsweise einstückigen, Unterteilkörper, der die Stellfläche 5 bereitstellt. Alternativ das Unterteil 4 oder der Unterteilkörper des Unterteils 4 auch als Blechteil, insbesondere als gebogenes Blechteil, ausgebildet sein.

Die Oberseite des Unterteilkörpers stellt zweckmäßigerweise eine kontinuierliche, insbesondere reliefartig geformte Fläche dar und ist vorzugsweise im Wesentlichen geschlossen. Die Unterseite des Unterteilkörpers ist exemplarisch im Wesentlichen offen. Über die Unterseite ist zweckmäßigerweise eine Vielzahl von Verstärkungsrippen zugänglich.

Der vorzugsweise einstückige Unterteilkörper weist verschiedene integrierte Strukturen auf, insbesondere die nachstehend erläuterte U-förmige Ergebung 133, Vertiefung 131, Stellfläche 5, Griffanordnung 134, nicht-bewegliche Kopplungsstruktur 92, Radanbringungsabschnitte 136, Auszugs-Befestigungsschnittstelle 137, erste Befestigungseinrichtung 20, angewinkelter Oberseitenabschnitt 25 und/oder Gestellanbringungsabschnitte 138.

An dem vorzugsweise einstückigen Unterteilkörper sind ein bewegliches Kopplungselement 91, die Standfüße 39, 39A, der vertikale Gestellabschnitt 14 und/oder die Räder 11 angebracht, wie nachstehend noch im Einzelnen erläutert wird.

Zunächst zu der Stellfläche 5:
Die Stellfläche 5 ist im Wesentlichen rechteckig und vorzugsweise so groß wie die Unterseite des kastenförmigen Behälters 80. In der Stellfläche 5 ist exemplarisch eine nicht-bewegliche Kopplungsstruktur 92 vorhanden, die Teil der nachstehend noch näher erläuterten Behälter-Befestigungsschnittstelle 6 ist. Exemplarisch umfasst die nicht-bewegliche Kopplungsstruktur 92 zwei im Bereich der Längsseiten 9 angeordnete längliche Vertiefungen, die sich in y-Richtung erstrecken.

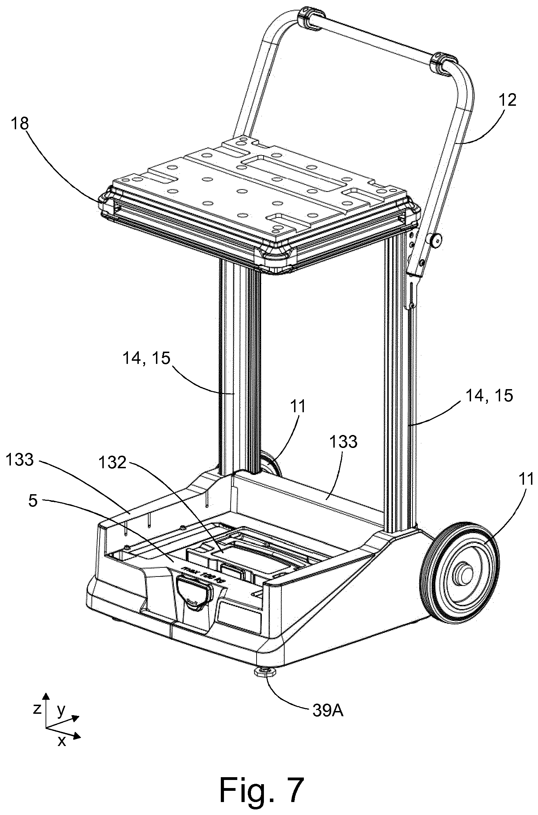

In der Stellfläche 5 ist exemplarisch eine Vertiefung 131 vorhanden, die ein Behälteraufnahmevolumen bereitstellt, in dem ein Zusatzbehälter 132 untergebracht werden kann, der kleiner als der kastenförmige Behälter 80 ist. Die Figur 7 zeigt das Beförderungsfahrzeug 2 mit eingesetztem Zusatzbehälter 132. Der Zusatzbehälter 132 ist insbesondere lose einsetzbar. Bei eingesetztem Zusatzbehälter 132 ist vorzugsweise weiterhin der kastenförmige Behälter 80 auf die Stellfläche 5 abstellbar und über die Behälter-Befestigungsschnittstelle 6 an dem Unterteil 4 befestigbar. Der kastenförmige Behälter 80 deckt den Zusatzbehälter 132 dann zweckmäßigerweise ab.

Exemplarisch handelt es sich bei dem Zusatzbehälter 132 um eine verkleinerte Version des kastenförmigen Behälters 80, so dass die untenstehende Beschreibung des kastenförmigen Behälters 80 insoweit auch für den Zusatzbehälter 132 gilt. In dem Zusatzbehälter kann beispielsweise Zubehör, insbesondere Werkzeugzubehör, bereitgestellt sein. Die Vertiefung 131 ist exemplarisch quaderförmig. Dadurch, dass sich die Vertiefung 131 in der Stellfläche 5 befindet, ergibt sich eine im Wesentlichen rahmenförmige Stellfläche 5.

Die Stellfläche 5 wird von der U-förmigen Erhebung 133 umgeben. Die U-förmige Erhebung 133 ist nach vorne hin geöffnet. Die Schenkel der U-förmigen Erhebung 133 stellen obere Abschnitte der Längsseiten 9 des Unterteils 4 dar. Exemplarisch erstreckt sich der vertikale Gestellabschnitt 14 von der U-förmigen Erhebung 133 aus nach oben.

Das Unterteil 4 weist Gestellanbringungsabschnitte 138 auf, an denen vertikale Gestellelemente 15 des vertikalen Gestellabschnitts 14 angebracht sind. Die Gestellanbringungsabschnitte 138 umfassen exemplarisch Öffnungen, die vorzugsweise an den beiden Eckpunkten der U-förmigen Erhebung 133 angeordnet sind. Die Öffnungen sind exemplarisch L-förmig ausgestaltet. In die Öffnungen sind die vertikalen Gestellelemente 15 eingesetzt.

Das Unterteil 4 verfügt an seiner Unterseite über zweckmäßigerweise vier Standfüße 39, 39A mit denen das Beförderungsfahrzeug 2 in Standstellung stabil auf einem ebenen Boden steht. Die Standfüße 39, 39A sind keine Räder. Die Standfüße 39 weisen exemplarisch eine zylindrische Form auf und sind mit ihrer Zylinderachse oder Längsachse parallel zur z-Richtung ausgerichtet. Der Standfuß 39A ist vorzugsweise höhenverstellbar und die anderen drei Standfüße 39 sind zweckmäßigerweise nicht höhenverstellbar. Der Standfuß 39A verfügt insbesondere über einen Schraubabschnitt, mit dem der Standfuß 39A an einem Gewinde am Unterteilkörper befestigt ist, so dass die Höhe des Standfußes 39A durch eine Schraubbewegung verändert werden kann. Die Standfüße 39, 39A sind zweckmäßigerweise in den vier Eckbereichen der Unterseite des Unterteils 4 angeordnet.

Das Beförderungsfahrzeug 2 ist ausgebildet, sich in der aufrechten Stellung mit den Standfüßen 39, 39A und insbesondere nicht mit den Rädern 11 gegenüber dem Boden abzustützen. Zu diesem Zweck erstrecken sich die Standfüße 39, 39A in vertikaler Richtung weiter nach unten als die Räder 11; d.h., die Standfüße 39, 39A stellen in der aufrechten Stellung des Beförderungsfahrzeugs 2 den untersten Punkt des Beförderungsfahrzeugs 2 dar. Das Beförderungsfahrzeug 2 steht erst in einer gekippten Stellung auf den Rädern 11; in der gekippten Stellung steht das Beförderungsfahrzeug 2 zweckmäßigerweise auf keinem der Standfüße 39, 39A.

Das Unterteil 4 weist an seiner Vorderseite 10 eine Griffanordnung 134 mit einem vollständig umgreifbaren Tragegriff 135 auf. Die Griffanordnung 134 ist zweckmäßigerweise als in y-Richtung vorstehender, unterer Rand des Unterteils 4, insbesondere des einstückigen Unterteilkörpers, ausgebildet. Die Griffanordnung 134 erstreckt sich zweckmäßigerweise über mehr als die Hälfte, mehr als 70 Prozent oder über die gesamte x-Erstreckung der Vorderseite 10 des Unterteils 4.

Die Griffanordnung 134 ist an der Unterseite als in y-Richtung ausgedehnte greifbare Struktur ausgebildet, die exemplarisch zwei voneinander beabstandete, parallel zu einander in x-Richtung verlaufende Wände umfasst, die zweckmäßigerweise über eine Mehrzahl von Rippen miteinander verbunden sind. In y-Richtung hinter der Griffanordnung 134 sind zweckmäßigerweise ein oder mehrere freie Räume in dem Unterteil 4 vorgesehen, in die beim Greifen der Griffanordnung 134 die Finger eines Benutzers aufgenommen werden können.

Der vollständig umgreifbare Tragegriff 135 ist exemplarisch nur im mittleren x-Bereich des Unterteils 4 vorhanden und wird zweckmäßigerweise durch einen stegförmigen Abschnitt gebildet, der eine an der Vorderseite vorhandene Einbuchtung überbrückt. Zwischen dem Tragegriff 135 und der Vorderseite der Einbuchtung ergibt sich eine Öffnung, durch die ein Benutzer beim Umgreifen des Tragegriffs 135 seine Finger führen kann.

Das Unterteil 4 weist an seinen beiden Längsseiten 9 jeweils einen Radanbringungsabschnitt 136 auf, wobei an jedem Radanbringungsabschnitt 136 eines der Räder 11 angebracht ist. Die Radanbringungsabschnitte 136 sind zweckmäßigerweise als nach unten hin geöffnete Aussparungen in den Längsseiten 9 des Unterteils ausgebildet und vorzugsweise im rückwärtigen Bereich 7 angeordnet. An den Längsseiten 9 des Unterteils 4 ist dementsprechend jeweils ein Rad 11 angeordnet, und zwar im rückwärtigen Bereich 7 des Beförderungsfahrzeugs 2, also in der Nähe der Rückseite 8. Die beiden Räder 11 verfügen über koaxial angeordnete, in x-Richtung ausgerichtete Drehachsen.

Im Folgenden soll näher auf die am Unterteil 4 vorhandene Behälter-Befestigungsschnittstelle 6 eingegangen werden. Exemplarisch umfasst die Behälter-Befestigungsschnittstelle ein bewegliches, durch Benutzerbetätigung wahlweise in eine Verriegelungsstellung oder eine Freigabestellung versetzbares Kopplungselement 91. In der Verriegelungsstellung steht das Kopplungselement 91 in Eingriff mit einer am kastenförmigen Behälter 80 angeordneten ersten nicht-beweglichen Kopplungsstruktur. In der Freigabestellung gibt das Kopplungselement 91 die erste nicht-bewegliche Kopplungsstruktur frei, so dass der kastenförmige Behälter 80 von dem Unterteil 4 abgenommen werden kann.

Das bewegliche Kopplungselement 91 ist exemplarisch als Drehriegel, insbesondere als T-förmiger Drehriegel, ausgebildet. Vorzugsweise ist das bewegliche Kopplungselement 91 ein am Unterteil 4 beweglich angebrachter, selbst jedoch starrer Körer. Das bewegliche Kopplungselement 91 lässt sich manuell in verschiedene Drehstellungen versetzen, um die Befestigung des Behälters 80 an dem Beförderungsfahrzeug 2 wahlweise herzustellen oder zu lösen.

Das bewegliche Kopplungselement 91 ist exemplarisch an der Vorderseite 10 des Unterteils 4 angebracht und vorzugsweise drehbar gelagert, insbesondere um eine y-Drehachse. Das bewegliche Kopplungselement 91 ist zweckmäßigerweise in der Einbuchtung an der Vorderseite 10 angeordnet.

Die Behälter-Befestigungsschnittstelle 6 umfasst vorzugsweise ferner die vorstehend bereits erwähnte nicht-bewegliche Kopplungsstruktur 92. Die nicht-bewegliche Kopplungsstruktur 92 lässt sich in Eingriff mit nachstehend noch erläuterten unteren Behälter-Kopplungsmitteln 82 bringen.

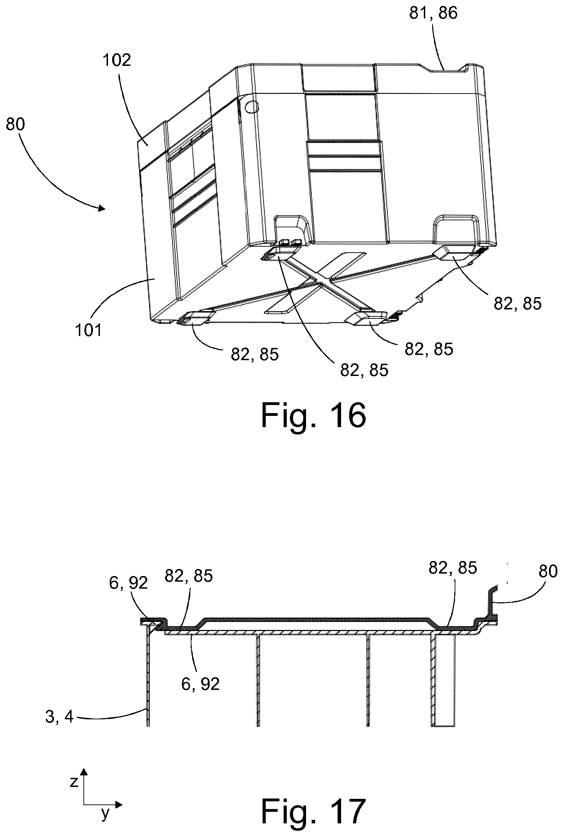

Die Figur 17 zeigt einen vertikalen Schnitt durch den kastenförmigen Behälter 80 in einem Zustand, in dem dessen als Standfüße ausgebildete zweite nicht-bewegliche Kopplungsstruktur 85 mit der nicht-beweglichen Kopplungsstruktur 92 der Behälter-Schnittstelle 6 in Eingriff steht. Exemplarisch verfügt die nicht-bewegliche Kopplungsstruktur 92 einen Vorsprung, der von den Standfüßen, insbesondere den hinteren Standfüßen, zweckmäßigerweise nur den hinteren Standfüßen, hintergriffen wird.

Vorzugsweise ist die Behälter-Befestigungsschnittstelle 6 und/oder der Behälter 80 derart ausgebildet, dass der Behälter 80 in einem an dem Beförderungsfahrzeug 2 fixierten Zustand mit seiner Unterseite und Vorderseite, insbesondere nur mit seiner Unterseite und Vorderseite, an dem Beförderungsfahrzeug 2 befestigt ist.

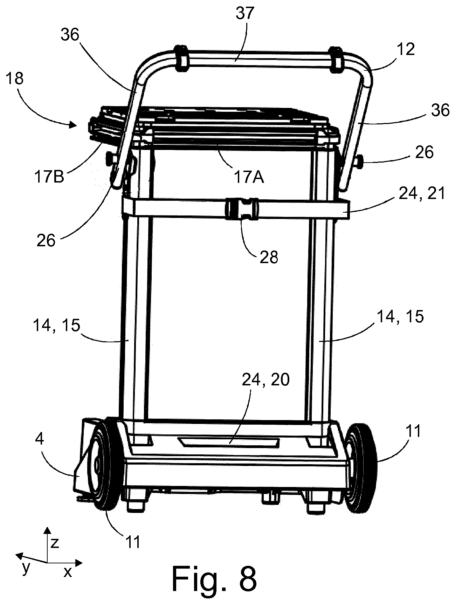

Im Folgenden soll auf die am Unterteil vorhandene erste Befestigungseinrichtung 20 eingegangen werden. Die erste Befestigungseinrichtung 20 ist insbesondere in den Figuren 8 bis 13 gezeigt.

Die erste Befestigungseinrichtung 20 ist Teil einer Arbeitstisch-Befestigungsschnittstelle 24, mit der ein länglicher Arbeitstisch 40 in vertikaler Ausrichtung an dem Beförderungsfahrzeug 2 anbringbar ist. Die erste Befestigungseinrichtung 20 umfasst einen Schlitz 20 und eine über den Schlitz 20 zugängliche Befestigungsstruktur 29, die mit einem Befestigungselement 41 des Arbeitstischs 40 in Eingriff gebracht werden kann, um den Arbeitstisch 40 an der Arbeitstisch-Befestigungsschnittstelle 24 zu befestigen. Die erste Befestigungseinrichtung 20 ist in rückwärtiger Richtung hinter dem vertikalen Gestellabschnitt 14 angeordnet.

Die Befestigungsanordnung 48 und der Schlitz 22 sind vorzugsweise derart ausgestaltet, dass sich die Befestigungsanordnung 48 nur in der vorstehend erwähnten, gekippten Stellung des Arbeitstischs 40 in den Schlitz 22 einführen lässt.

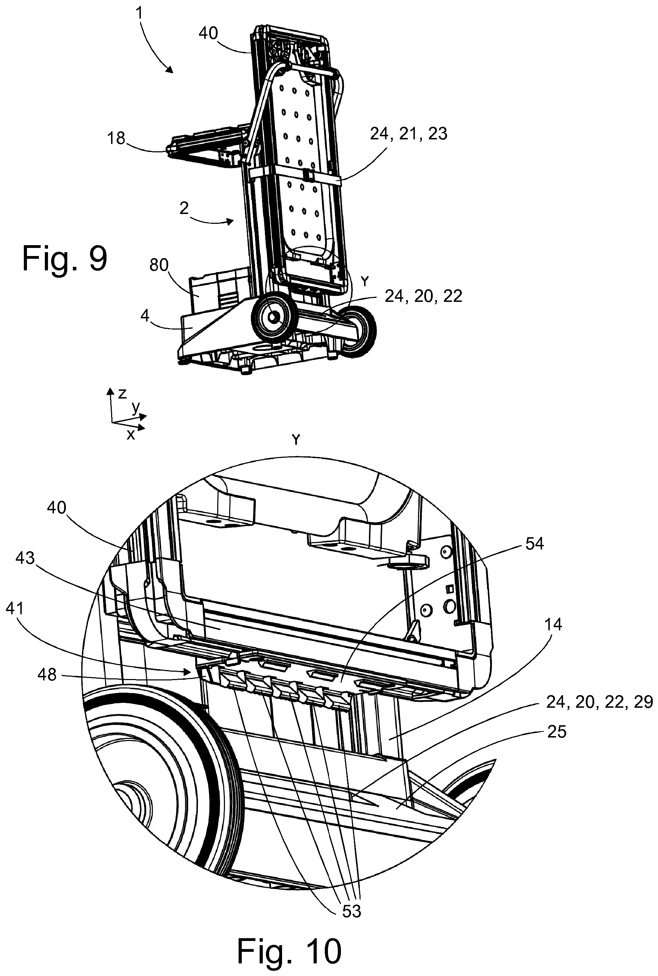

Die Figur 10 zeigt den in der Figur 9 mit "Y" gekennzeichneten Bereich im Detail. Zum Zwecke der besseren Sichtbarkeit ist der Arbeitstisch 40 in den Figuren 9 und 10 in einer Position gezeigt, in der das Befestigungselement 41 nicht in den Schlitz 22 eingeführt ist. Bei einer korrekten Anbringung des Arbeitstischs 40 am Beförderungsfahrzeug 2 ist das Befestigungselement 41 in den Schlitz 22 eingeführt.

Wie in der Figur 10 zu sehen, erstreckt sich der Schlitz 22 in x-Richtung und ist in y-Richtung unmittelbar hinter dem vertikalen Gestellabschnitt 14 angeordnet. Der Schlitz 22 befindet sich auf einem angewinkelten Oberseitenabschnitt 25. Der Normalvektor des angewinkelten Oberseitenabschnitts 25 zeigt insbesondere in eine y-z-Richtung. In der Figur 10 ist ferner das Befestigungselement 41 zu sehen, das über eine insbesondere hakenförmige Befestigungsanordnung 48 mit exemplarisch mehreren L-förmigen Befestigungsvorsprüngen 53 verfügt. Die Befestigungsstruktur 29 ist derart ausgebildet, dass sie mit der Befestigungsanordnung 48, insbesondere den Befestigungsvorsprüngen 53 in Eingriff gebracht werden kann, so dass der Arbeitstisch 40 am Unterteil 4 zumindest in einer Linearrichtung, insbesondere der Vertikalrichtung, fixiert wird.

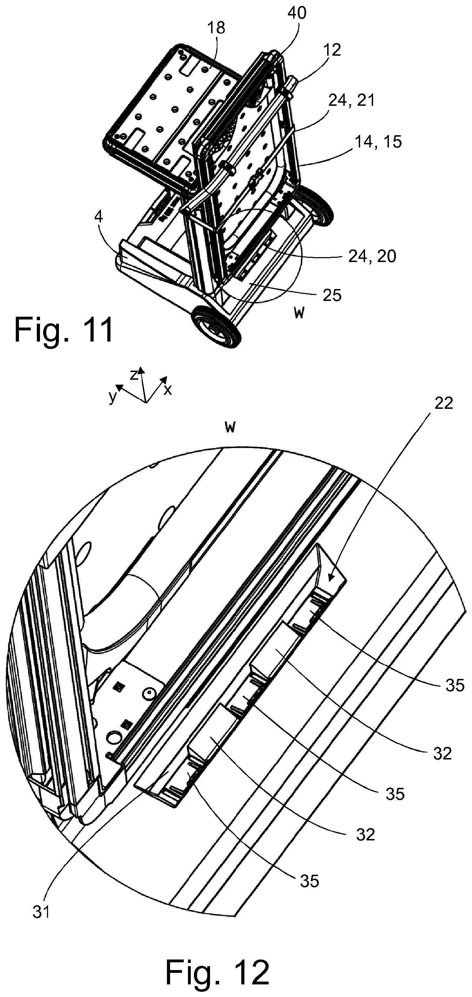

Die Figur 12 zeigt den in der Figur 11 mit "W" gekennzeichneten Bereich im Detail.

In der Figur 12 ist insbesondere der Schlitz 22 zu sehen. Über den Schlitz 22 ist die Befestigungsstruktur 29 zugänglich. In dem Schlitz 22 befinden sich zweckmäßigerweise zwei angewinkelte Verstärkungsstrukturen 32, die in x-Richtung voneinander beabstandet sind. Zwischen den Verstärkungsstrukturen 32 und in x-Richtung vor und hinter den Verstärkungsstrukturen 32 sind Rasthaken 35 vorgesehen. Die Verstärkungsstrukturen 32 und die Rasthaken 35 sind in Entsprechung zu den Befestigungsvorsprüngen 53 angeordnet, so dass bei in den Schlitz 22 eingeführtem Befestigungselement 41 mehrere Befestigungsvorsprünge, insbesondere der erste, dritte und fünfte Befestigungsvorsprung, im Bereich der Rasthaken 35 befinden.

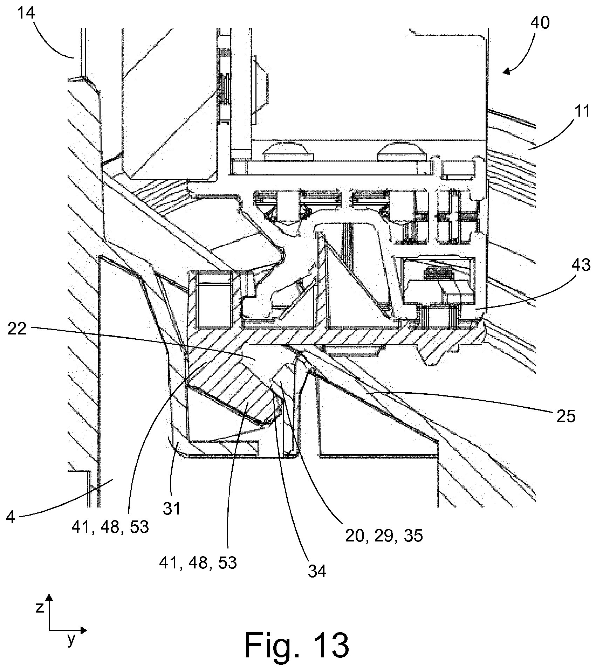

Die Figur 13 zeigt eine Schnittansicht der ersten Befestigungseinrichtung 20 mit eingesetztem Befestigungselement 41. Die Befestigungsstruktur 29 umfasst eine Befestigungsfläche 34, die von der Befestigungsanordnung 48 hintergriffen wird. Die Befestigungsfläche 34 wird durch einen horizontalen Vorsprung bereitgestellt. Der horizontale Vorsprung kann zweckmäßigerweise Teil eines L-förmigen Rasthakens 35 sein, der an der Rückwand der Befestigungsstruktur 29 angefedert ist. Vorzugsweise sind in x-Richtung mehrere L-förmige Rasthaken nebeneinander angeordnet, so dass jeweils ein L-förmiger Rasthaken mit einem Befestigungsvorsprung 53 in Eingriff gebracht werden kann. Vorzugsweise ist für jeden zweiten Befestigungsvorsprung 53, insbesondere für den zweiten und vierten Befestigungsvorsprung 53, kein L-förmiger Rasthaken vorhanden und stattdessen vorzugsweise eine Verstärkungsstruktur 32 vorgesehen.

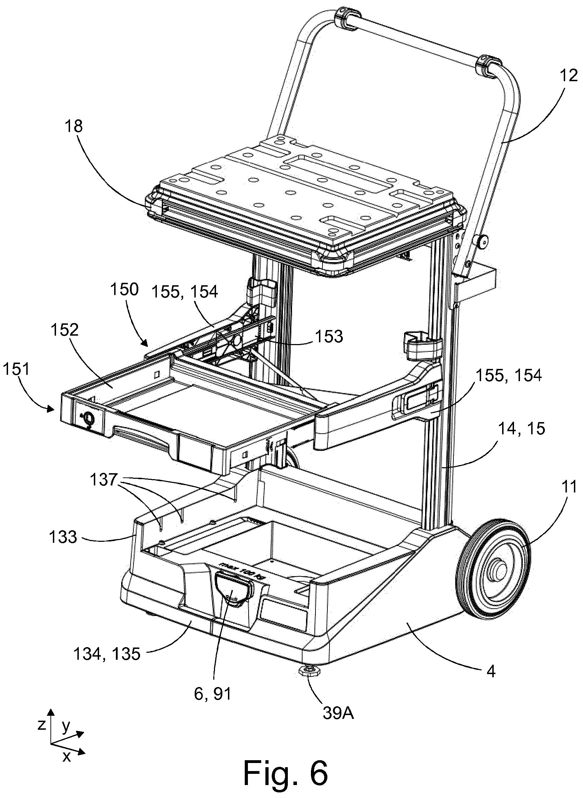

In der Figur 6 ist das Beförderungsfahrzeug 2 mit einer Auszugsanordnung 150 gezeigt. Die Auszugsanordnung 150 ist oberhalb der Behälter-Befestigungsschnittstelle 6 und zweckmäßigerweise unterhalb des integrierten Tischs 18 am vertikalen Gestellabschnitt 14 angeordnet. Die Auszugsanordnung 150 umfasst eine Auszugeinheit 151 mit einem ausziehbaren Behälter-Aufnahmeelement 152 zur insbesondere losen Aufnahme eines kastenförmigen Behälters 80. Das Behälter-Aufnahmeelement 152 ist insbesondere als Tablar, Schublade oder Schubfach ausgebildet.

Die Auszugeinheit 151 umfasst ferner einen Auszugsmechanismus 153, insbesondere einen Teleskopauszugsmechanismus. Die Auszugeinheit 151 ist über eine lösbare Verbindung, insbesondere eine Schraubverbindung, an einer zweckmäßigerweise zwei Tragearme 154 umfassenden Trageanordnung 155 befestigt, die Teil der Auszugsanordnung 150 ist.

Am Unterteil 4 ist vorzugsweise eine Auszug-Befestigungsschnittstelle 137 vorhanden, an die die Auszugeinheit 151 (in einem von der Trageanordnung 155 abgenommenen Zustand) befestigt werden kann, insbesondere über den Auszugmechanismus 153. Die Auszugeinheit 151 kann zweckmäßigerweise auch ohne die Trageanordnung 155 bereitgestellt und direkt an der Auszug-Befestigungsschnittstelle 137 befestigt sein, so dass direkt am Unterteil 4 das ausziehbare Behälter-Aufnahmeelement 152 bereitgestellt wird. Zweckmäßigerweise wird in diesem Zustand die Stellfläche 5 von der Auszugeinheit 151 verdeckt und kann nicht mehr zum Abstellen des kastenförmigen Behälters 80 verwendet werden.

Die Auszug-Befestigungsschnittstelle 137 ist exemplarisch an den Innenseiten der Schenkel der U-förmigen Erhebung 133 angeordnet. Zweckmäßigerweise ist die U-förmige Erhebung 133 derart ausgestaltet, dass die Auszugeinheit 151 in den zwischen den Schenkeln der U-förmigen Erhebung 133 bereitgestellten Raum passt. Zweckmäßigerweise umfasst die Auszug-Befestigungsschnittstelle 137 an jeder Innenseite über wenigstens ein, insbesondere drei Löcher, mit denen die AuszugEinheit 151 über Schraubverbindungen an das Unterteil 4 befestigt werden kann.

Nachfolgend soll auf den vertikalen Gestellabschnitt 14 und den integrierten Tisch 18 eingegangen werden:
Der vertikale Gestellabschnitt 14 spannt eine x-z-Ebene auf. Exemplarisch umfasst der vertikale Gestellabschnitt 14 zwei längliche, sich von dem Unterteil 4 vertikal nach oben erstreckende, parallel zueinander verlaufende vertikale Gestellelemente 15. Vorzugsweise besteht der vertikale Gestellabschnitt 14 aus den beiden Gestellelementen 15.

Die beiden vertikalen Gestellelemente 15 nehmen jeweils denselben y- und z-Bereich ein und sind in x-Richtung zueinander versetzt. Die vertikalen Gestellelemente 15 sind in y-Richtung jeweils in der Nähe der Rückseite 8, also im rückwärtigen Bereich 7, angeordnet und befinden sich in x-Richtung im Bereich der Längsseiten 9. Die beiden vertikalen Gestellelemente 15 sind an der Oberseite des Unterteils 4 befestigt und erstrecken sich vertikal nach oben.

Die vertikalen Gestellelemente 15 sind exemplarisch als Profile, insbesondere als Metallprofile, ausgebildet.

An den vertikalen Gestellabschnitt 14 schließt sich in z-Richtung der in den Fahrzeugkörper integrierte Tisch 18 an. Der integrierte Tisch 18 stellt den vertikal oberen Abschluss des Fahrzeugköpers - also insbesondere des Beförderungsfahrzeugs 2 ohne den Griff 12 - dar. Zweckmäßigerweise stellt der integrierte Tisch 18 den vertikal höchsten Punkt des Beförderungsfahrzeugs 2 ohne den Griff 12 dar. Der integrierte Tisch 18 ist optional vorgesehen. Anstelle des integrierten Tischs 18 könnte beispielsweise auch ein Versteifungselement zwischen den beiden vertikalen Gestellelementen 15 vorhanden sein.

Der integrierte Tisch 18 verfügt über vier längliche, horizontale Gestellelemente 17A, 17B. Die horizontalen Gestellelemente 17A, 17B sind exemplarisch als Profile, insbesondere als Metallprofile, ausgebildet. Die Gestellelemente 17 bilden zusammen einen horizontalen Gestellabschnitt in der Form eines rechteckigen Rahmens, auf dem die Tischplatte 19 des integrierten Tischs 18 angeordnet, insbesondere aufgesetzt, ist. Der integrierte Tisch 18 nimmt im Wesentlichen denselben x-y-Bereich wie das Unterteil 4 ein. Der integrierte Tisch 18 hat zweckmäßigerweise eine quaderförmige, insbesondere flache Grundgestalt.

Der horizontale Gestellabschnitt spannt eine x-y-Ebene auf, die orthogonal zu der von dem vertikalen Gestellabschnitt 14 aufgespannten x-z-Ebene ausgerichtet ist. Der horizontale Gestellabschnitt ist am oberen Ende des vertikalen Gestellabschnitts 14, exemplarisch an den beiden vertikalen Gestellelementen 15, befestigt. Der integrierte Tisch 18 ist insbesondere mit seinen beiden rückwärtigen Eckbereichen an den vertikalen Gestellelementen 15 befestigt.

Vorzugsweise verfügt der integrierte Tisch 18 über einen Abstützabschnitt 27, an dem der nachstehend noch näher erläuterte Arbeitstisch 40 in einer horizontalen Ausrichtung mit dem am Arbeitstisch 40 stirnseitig angebrachten Befestigungselement 41 abgestützt werden kann, um eine stabile Arbeitsstellung einzunehmen.

Der Abstützabschnitt 27 ist beispielsweise in der Figur 1 zu sehen und exemplarisch an einer, mehreren oder sämtlichen horizontalen Gestellelementen 17A, 17B vorhanden. Zweckmäßigerweise umfasst der Abstützabschnitt 27 eine Nut, insbesondere eine V-Nut, in die das Befestigungselement 41 eingreifen kann. Die Nut ist vorzugsweise nach oben hin geöffnet, so dass das Befestigungselement 41 von oben in die Nut eingreifen kann. Zweckmäßigerweise erstreckt sich die Nut über die gesamte Länge des horizontalen Gestellelements 17A, 17B.

Nachstehend sollen die kastenförmigen Behälter 80 und die Behälter-Befestigungsschnittstelle 6 näher erläutert werden, insbesondere unter Bezugnahme auf die Figur 1. In der Figur 1 ist das Beförderungsfahrzeug 2 mit wenigstens einem angebrachten kastenförmigen Behälter 80 sowie einem angebrachten Arbeitstisch 40 gezeigt. Diese Anordnung aus Beförderungsfahrzeug 2, Behälter 80 und Arbeitstisch 40 soll auch als Beförderungsvorrichtung 1 bezeichnet werden.

Die Behälter-Befestigungsschnittstelle 6 dient dazu, den kastenförmigen Behälter 80 an dem unteren Abschnitt 3, insbesondere dem Unterteil 4, des Beförderungsfahrzeugs 2 zu befestigen, vorzugsweise derart, dass der kastenförmige Behälter 80 in sämtliche Raumrichtungen fixiert ist. Zweckmäßigerweise ist die Behälter-Befestigungsschnittstelle 6 derart ausgebildet, dass sich der Behälter 80 werkzeuglos an der Behälter-Befestigungsschnittstelle 6 befestigen und/oder von dieser lösen lässt.

Exemplarisch ist in der Figur 1 ein vertikaler Stapel 90, der zwei aufeinander gestapelte und aneinander gekoppelte kastenförmige Behälter 80 umfasst, auf der Stellfläche 5 abgestellt und durch die Behälter-Befestigungsschnittstelle 6 an dem Unterteil 4 befestigt.

Nun zu dem Behälter 80:
Der Behälter 80 verfügt über eine quaderförmige Grundgestalt. Exemplarisch verfügt der Behälter 80 über ein Unterteil 101 und einen auf das Unterteil 101 aufgesetzten Deckel 102. Der Deckel 102 ist zweckmäßigerweise an dem Unterteil 101 angelenkt. Vorzugsweise weisen das Unterteil 101 und der Deckel 102 die gleiche horizontale Außenkontur auf. An der Oberseite des Behälters 80 ist exemplarisch ein Tragegriff 103 vorgesehen, der insbesondere ausklappbar ist. Der Trageriff 103 ist rein optional und kann auch weggelassen werden.

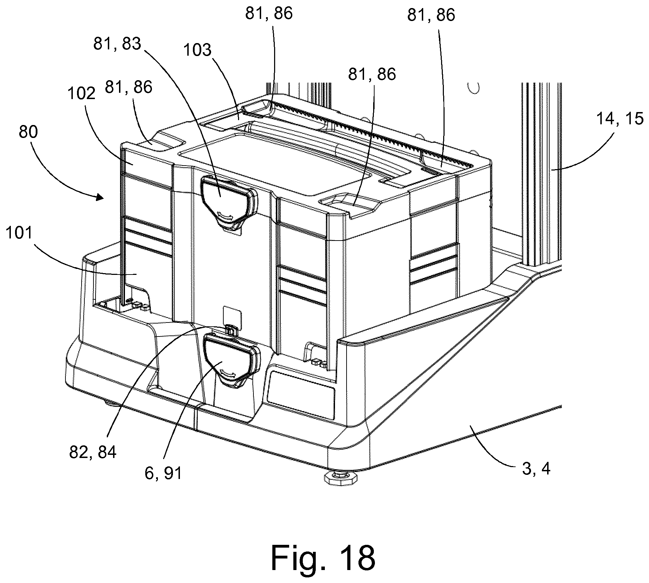

Der Behälter 80 verfügt über obere Behälter-Kopplungsmittel 81 und untere Behälter-Kopplungsmittel 82, die insbesondere in den Figuren 16, 17 und 18 zu sehen sind. Exemplarisch sind die oberen Behälter-Kopplungsmittel 81 in Entsprechung zu den unteren Behälter-Kopplungsmitteln 82 ausgebildet, so dass sich ein weiterer, mit identischen Behälter-Kopplungsmitteln ausgestatteter Behälter 80 auf den vorliegenden Behälter 80 aufsetzen lässt und mit den unteren Behälter-Kopplungsmitteln 82 des weiteren Behälters 80 an den oberen Behälter-Kopplungsmitteln 81 des vorliegenden Behälters 80 befestigen lässt, insbesondere derart, dass die beiden Behälter 80 in sämtliche Raumrichtungen zueinander fixiert sind und einen stabilen vertikalen Stapel 90 bilden.

Die unteren Behälter-Kopplungsmittel 82 umfassen insbesondere eine erste nicht-bewegliche Kopplungsstruktur 84, beispielsweise einen Kopplungsvorsprung, der mit dem beweglichen Kopplungselement 91 in Eingriff gebracht werden kann. Die nicht-bewegliche Kopplungsstruktur 84 ist insbesondere an der Vorderseite des Behälters 80 angeordnet.

Die unteren Behälter-Kopplungsmittel umfassen ferner eine zweite nicht-bewegliche Kopplungsstruktur 85, beispielsweise Standfüße, die mit der nicht-beweglichen Kopplungsstruktur 92 in Eingriff gebracht werden können und an der Unterseite des Behälters 80 angeordnet sind.

Die oberen Behälter-Kopplungsmittel 81 umfassen zweckmäßigerweise ein bewegliches Kopplungselement 83, exemplarisch einen Drehriegel, insbesondere einen T-förmigen Drehriegel, der zweckmäßigerweise in Entsprechung zu dem beweglichen Kopplungselement 91 ausgebildet ist. Das bewegliche Kopplungselement 83 kann insbesondere mit der ersten nicht-beweglichen Kopplungsstruktur 84 eines weiteren Behälters 80 in Eingriff gebracht werden. Ferner kann das bewegliche Kopplungselement 83 dazu dienen, den Deckel 102 zu verriegeln.

Die oberen Behälter-Kopplungsmittel 81 umfassen ferner vorzugsweise eine dritte nicht-bewegliche Kopplungsstruktur 86. Die dritte nicht-bewegliche Kopplungsstruktur 86 kann zweckmäßigerweise mit der zweiten nicht-beweglichen Kopplungsstruktur 85 eines weiteren Behälters 80 in Eingriff gebracht werden. Die dritte nicht-bewegliche Kopplungsstruktur 86 umfasst vorzugsweise eine oder mehrere Vertiefungen und ist an der Oberseite des Behälters 80 angeordnet.

Der Behälter 80 ist insbesondere derart ausgebildet, dass der Behälter 80 in einem an einem weiteren Behälter 80 fixierten Zustand mit seiner Unterseite und Vorderseite, insbesondere nur mit seiner Unterseite und Vorderseite, an dem weiteren Behälter 80 befestigt ist.

Die vorstehend beschriebenen Behälter 80 können beispielsweise in Entsprechung zu den in der EP2315701B1 beschriebenen Behältern ausgebildet sein.

Im Folgenden soll auf die möglichen Konfigurationen der Beförderungsvorrichtung 1 eingegangen werden.

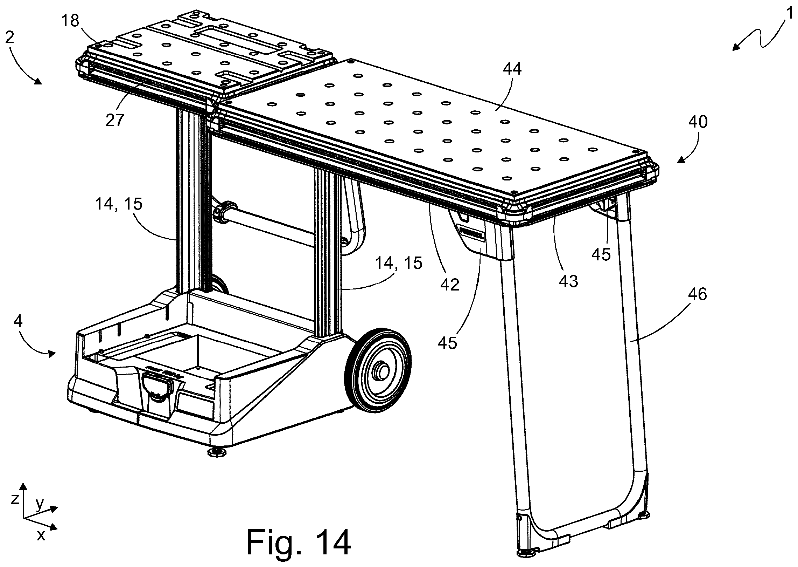

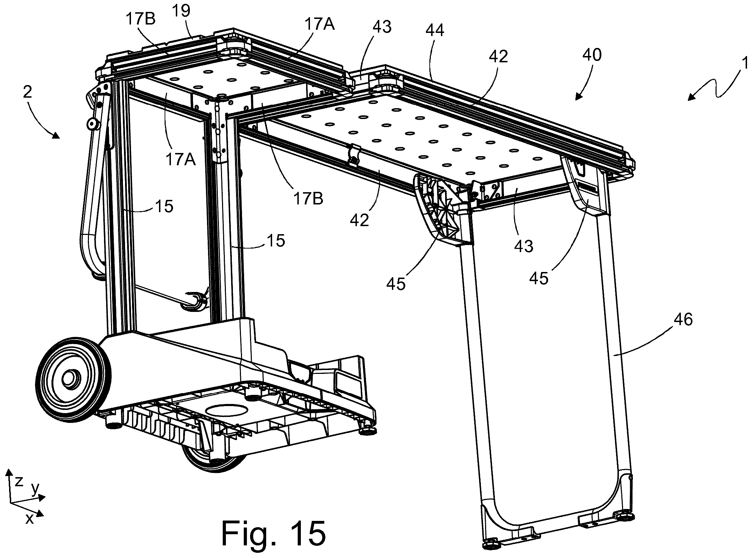

Die mit dem länglichen Arbeitstisch 40 ausgestatte Beförderungsvorrichtung 1 kann zweckmäßigerweise wenigstens zwei verschiedene Konfigurationen einnehmen: eine Transportkonfiguration, bei der der Arbeitstisch 40 wie in der Figur 1 gezeigt in vertikaler Ausrichtung an dem Beförderungsfahrzeug 2 befestigt ist und eine Arbeitskonfiguration, bei der der Arbeitstisch wie in den Figuren 14 und 15 gezeigt in horizontaler Ausrichtung an dem integrierten Tisch 18 angebracht ist.

In der Transportkonfiguration ist der Arbeitstisch 40 (und insbesondere auch der kastenförmige Behälter 80) fest an dem Beförderungsfahrzeug 2 angebracht, so dass der Arbeitstisch 40 (und der kastenförmige Behälter 80) auch in einer Fahrstellung, in der die Beförderungsvorrichtung 1 gegenüber dem Boden 30 verkippt ist, stabil am Beförderungsfahrzeug 2 befestigt sind und sich durch das Beförderungsfahrzeug 2 befördern lassen.

Der längliche Arbeitstisch 40 kann zweckmäßigerweise vollständig von dem Beförderungsfahrzeug abgenommen werden, insbesondere werkzeuglos.

Der längliche Arbeitstisch 40 ist mittels der Arbeitstisch-Befestigungsschnittstelle 24 in einer vertikalen Ausrichtung in dem rückwärtigen Bereich 7 an dem Beförderungsfahrzeug 2 werkzeuglos befestigbar, um eine Transportstellung einzunehmen, in der der längliche Arbeitstisch 40 durch das Beförderungsfahrzeug 2 beförderbar ist.

Wie in der Figur 1 zu sehen, ist der Arbeitstisch 40 in der Transportstellung mit seiner Längsachse vertikal - also in z-Richtung - ausgerichtet. Die Tischebene des Arbeitstischs 40 ist in der Transportstellung parallel zu einer x-z-Ebene ausgerichtet. Die x-Erstreckung des Arbeitstischs 40 entspricht der x-Erstreckung des vertikalen Gestellabschnitts 14. In der Transportstellung liegt der Arbeitstisch 40 an dem vertikalen Gestellabschnitt 40 an und nimmt zweckmäßigerweise denselben x-Bereich wie der vertikale Gestellabschnitt 40 ein. In z-Richtung erstreckt sich der Arbeitstisch 40 in der Transportstellung von dem Unterteil 4 nach oben und überragt vorzugsweise das Beförderungsfahrzeug 2, insbesondere den integrierten Tisch 18 und/oder den Griff 12.

Der Arbeitstisch 40 ist in der Transportstellung in rückwärtiger Richtung - also in y-Richtung hin zu der Rückseite 8 - hinter dem vertikalen Gestellabschnitt 14 angeordnet. In y-Richtung befindet sich der Arbeitstisch 40 in der Transportstellung auf der der Rückseite 8 zugewandten Seite des vertikalen Gestellabschnitts 14. Die Stellfläche 5 befindet sich exemplarisch auf der anderen Seite - also auf der der Vorderseite 10 zugewandten Seite des vertikalen Gestellabschnitts 14.

Die Figuren 14 und 15 zeigen die Beförderungsvorrichtung 1 in einer Arbeitskonfiguration. In der Arbeitskonfiguration ist der Arbeitstisch 40 von der Arbeitstisch-Befestigungsschnittstelle 24 abgenommen. Ferner befindet sich der Arbeitstisch 40 in einer horizontalen Ausrichtung; d.h. seine Tischebene ist parallel zu einer x-y-Ebene ausgerichtet. Die in den Figuren 14 und 15 gezeigte Stellung des Arbeitstischs 40 kann auch als stationäre Arbeitsstellung bezeichnet werden. In der Arbeitsstellung wird der Arbeitstisch 40 an einer seiner Stirnseiten von dem Beförderungsfahrzeug 2 abgestützt, insbesondere von dem integrierten Tisch 18. Auf der dem Beförderungsfahrzeug 2 abgewandten Stirnseite ist der Arbeitstisch 40 durch eine nachstehend noch näher erläuterte Tischbeinanordnung 46 abgestützt.

Zweckmäßigerweise greift das Befestigungselement 41 in der Arbeitskonfiguration mit seiner Befestigungsanordnung 48, insbesondere mit den Befestigungsvorsprüngen 53, in die Nut des Abstützabschnitts 27 ein. Zweckmäßigerweise ist der Arbeitstisch 40 in der Arbeitskonfiguration werkzeuglos von dem Beförderungsfahrzeug 2 abnehmbar.

Zweckmäßigerweise ist jeweils an der Vorderseite 10, den beiden Längsseiten 9 und/oder der Rückseite 8 des Beförderungsfahrzeugs 2, insbesondere des integrierten Tischs 18, ein entsprechender Abstützabschnitt 27 vorgesehen, an dem der Arbeitstisch 40 abgestützt werden kann. Der Arbeitstisch 40 ist folglich wahlweise an der Vorderseite 10, einer ersten Längsseite 9, einer zweiten Längsseite 9 und/oder der Rückseite 8 anbringbar.

Als nächstes soll auf die Arbeitstisch-Befestigungsschnittstelle 24 näher eingegangen werden.

Die Arbeitstisch-Befestigungsschnittstelle 24 dient dazu, den Arbeitstisch 40 an dem Beförderungsfahrzeug 2 zu befestigen, und zwar derart, dass sich der Arbeitstisch 40 stabil von dem Beförderungsfahrzeug 2 transportieren lässt. Vorzugsweise ist die Arbeitstisch-Befestigungsschnittstelle 24 derart ausgebildet, dass der Arbeitstisch 40 in angebrachtem Zustand in sämtliche Raumrichtungen relativ zum Beförderungsfahrzeug 2 fixiert ist.

Die Arbeitstisch-Befestigungsschnittstelle 24 umfasst die erste Befestigungseinrichtung 20 und eine zweite Befestigungseinrichtung 21. Die beiden Befestigungseinrichtungen 20, 21 sind beispielsweise in der Figur 8 gezeigt

Die erste Befestigungseinrichtung 20 ist derart ausgestaltet, dass der Arbeitstisch 40 mit dem Befestigungselement 41 in einer relativ zum vertikalen Gestellabschnitt 14 gekippten Ausrichtung an die erste Befestigungseinrichtung 20 anbringbar ist und durch Verschwenkung hin zu dem vertikalen Gestellabschnitt 14 eine vertikale Fixierung an der ersten Befestigungseinrichtung 20 erzielt wird. Mit der zweiten Befestigungseinrichtung 21 ist der Arbeitstisch 40 dann horizontal fixierbar, insbesondere an dem vertikalen Gestellabschnitt 14.

Zur Abnahme des Arbeitstischs 40 ist es notwendig, die zweite Befestigungseinrichtung 21 zu lösen und den Arbeitstisch 40 weg von dem Gestellabschnitt 14 zu verschwenken, so dass eine relativ zum vertikalen Gestellabschnitt 14 gekippte Ausrichtung einnimmt. Der Arbeitstisch 40 lässt sich dann durch eine lineare Bewegung in y-z-Richtung von dem Beförderungsfahrzeug 2 abnehmen.

Im Folgenden soll auf eine exemplarische Ausgestaltung der zweiten Befestigungseinrichtung 21 im Detail eingegangen werden:
Die zweite Befestigungseinrichtung 21 ist am vertikalen Gestellabschnitt 14 angeordnet, exemplarisch im oberen Bereich des vertikalen Gestellabschnitts 14. Die zweite Befestigungseinrichtung 21 umfasst einen Gurt 23, mit dem der Arbeitstisch in der Transportstellung an dem vertikalen Gestellabschnitt 14 in horizontaler Richtung fixierbar ist. Der Gurt 23 ist exemplarisch an zwei Verankerungspunkten befestigt. Die beiden Verankerungspunkte liegen exemplarisch auf gleicher Höhe. Exemplarisch ist der Gurt 23 in der Transportstellung quer um den Arbeitstisch 40 gelegt. Der Gurt 23 hat in diesem Zustand in einer x-y-Ansicht einen U-förmigen Verlauf. Der Gurt 23 verfügt über ein Verschlusselement 28, mit dem er sich zur Freigabe oder Aufnahme des Arbeitstischs 40 öffnen und zur Fixierung des Arbeitstischs 40 schließen lässt. Exemplarisch ist das Verschlusselement 28 in x-Richtung in der Mitte des Gurts 23 angeordnet.

Im Folgenden soll der Griff 12 näher erläutert werden:
Der Griff 12 ist zweckmäßigerweise bügelförmig, insbesondere U-förmig ausgebildet. Der Griff 12 verfügt über zwei äußere Abschnitte 36, mit denen der Griff an dem vertikalen Gestellabschnitt 14 verschwenkbar angebracht ist. Die beiden äußeren Abschnitte 36 sind über einen mittleren, in x-Richtung verlaufenden Abschnitt 37 verbunden.

Das Beförderungsfahrzeug 2 verfügt über einen Positioniermechanismus 26, mit dem der Griff 12 in wenigstens zwei verschiedene Schwenkstellungen positioniert und fixiert werden kann. Exemplarisch ist der Griff 12 durch den Positioniermechanismus in drei verschiedenen Schwenkstellungen fixierbar.

Im Folgenden soll näher auf den Arbeitstisch 40 eingegangen werden, insbesondere unter Bezugnahme auf die Figuren 14 und 15.

Der Arbeitstisch 40 hat eine längliche, insbesondere rechteckige Grundgestalt. Zweckmäßigerweise ist der Arbeitstisch 40 wenigstens 1,5 mal, insbesondere doppelt so lang wie breit. Der Arbeitstisch 40 verfügt über ein rahmenförmiges Arbeitstisch-Gestell, das längsseitige Arbeitstisch-Gestellelemente 42 und querseitige Arbeitstisch-Gestellelemente 43 umfasst. Die längsseiteigen Arbeitstisch-Gestellelemente 42 und die querseitigen Arbeitstisch-Gestellelemente 43 sind zweckmäßigerweise stangenförmig und insbesondere als Profile, vorzugsweise als Metallprofile, ausgebildet. Auf das rahmenförmige Arbeitstisch-Gestell ist eine Tischplatte 44 aufgesetzt.

Der Arbeitstisch 40 verfügt über die ausklappbare Tischbeinanordnung 46, die exemplarisch U-förmig ist. Die (im ausgeklappten Zustand) vertikalen Abschnitte der Tischbeinanordnung 46 sollen auch als Tischbeine bezeichnet werden. Die Tischbeinanordnung 46 ist zweckmäßigerweise an der Unterseite des Arbeitstischs 40 angeordnet, vorzugsweise im Bereich einer Stirnseite des Arbeitstischs 40.

## Patentansprüche

1. Beförderungsvorrichtung (1) mit einem Beförderungsfahrzeug (2) und einem vertikalen Stapel (90) von aneinander gekoppelten kastenförmigen Behältern (80), wobei das Beförderungsfahrzeug (2) umfasst:
einen Fahrzeugkörper mit einem Unterteil (4) und einem sich von der Oberseite des Unterteils (4) nach oben erstreckenden vertikalen Gestellabschnitt (14), wobei das Unterteil (4) über eine Stellfläche (5) und eine Behälter-Befestigungsschnittstelle (6) verfügt, mit der der auf der Stellfläche (5) abgestellte vertikale Stapel (90) mit seinem untersten kastenförmigen Behälter (80) an dem Unterteil (4) befestigbar ist,
einen am Fahrzeugkörper angeordneten Griff (12), mit dem das Beförderungsfahrzeug (2) in eine Kippstellung versetzbar ist, und
zwei am Unterteil (4) angeordnete Räder (11), mit denen das Beförderungsfahrzeug (2) in der Kippstellung gegenüber einem Boden abgestützt und relativ zum Boden bewegt werden kann, **dadurch gekennzeichnet, dass** das Unterteil (4) an seiner Unterseite über mehrere Standfüße (39, 39A) verfügt und das Beförderungsfahrzeug (2) ausgebildet ist, sich in einer aufrechten Stellung mit den Standfüßen (39, 39A) und nicht mit den Rädern (11) gegenüber dem Boden abzustützen, wobei
das Unterteil (4) in einem rückwärtigen Bereich (7) eine erste Befestigungseinrichtung (20) einer Arbeitstisch-Befestigungsschnittstelle (24) umfasst, mit der ein länglicher Arbeitstisch (40) in vertikaler Ausrichtung an dem Beförderungsfahrzeug (2) anbringbar ist, wobei die erste Befestigungseinrichtung (20) einen Schlitz (20) und eine über den Schlitz (20) zugängliche Befestigungsstruktur (29) aufweist.

2. Beförderungsvorrichtung (1) nach Anspruch 1, **dadurch gekennzeichnet, dass** wenigstens ein kastenförmiger Behälter (80) an seiner Oberseite einen Tragegriff (103) aufweist.

3. Beförderungsvorrichtung (1) nach Anspruch 1 oder 2, **dadurch gekennzeichnet, dass** wenigstens ein Standfuß (39A) höhenverstellbar ist.

4. Beförderungsvorrichtung (1) nach einem der voranstehenden Ansprüche, **dadurch gekennzeichnet, dass** das Unterteil (4) einen als Spritzgussteil gefertigten Unterteilkörper umfasst, der die Stellfläche (5) bereitstellt.

5. Beförderungsvorrichtung (1) nach einem der voranstehenden Ansprüche, **dadurch gekennzeichnet, dass** die Behälter-Befestigungsschnittstelle (6) ein bewegliches, durch Benutzerbetätigung wahlweise in eine Verriegelungsstellung oder eine Freigabestellung versetzbares Kopplungselement (91), insbesondere einen Drehriegel, umfasst, wobei das Kopplungselement (91) in der Verriegelungsstellung in Eingriff mit einer am untersten kastenförmigen Behälter (80) angeordneten ersten nicht-beweglichen Kopplungsstruktur steht, so dass der unterste kastenförmige Behälter (80) am Unterteil (4) befestigt ist, und in der Freigabestellung die erste nicht-bewegliche Kopplungsstruktur freigibt, so dass der unterste kastenförmige Behälter (80) von dem Unterteil (4) abgenommen werden kann.

6. Beförderungsvorrichtung (1) nach einem der voranstehenden Ansprüche, **dadurch gekennzeichnet, dass** in der Stellfläche (5) eine Vertiefung (131) vorhanden ist, die ein Behälteraufnahmevolumen bereitstellt, in dem ein Zusatzbehälter (132) untergebracht werden kann, der kleiner als der kastenförmige Behälter (80) ist.

7. Beförderungsvorrichtung (1) nach einem der voranstehenden Ansprüche, **dadurch gekennzeichnet, dass** das Unterteil (4) über eine U-förmige Erhebung (133) verfügt, die die Stellfläche (5) umgibt und von der aus sich der vertikale Gestellabschnitt (14) nach oben erstreckt.

8. Beförderungsvorrichtung (1) nach einem der voranstehenden Ansprüche, **dadurch gekennzeichnet, dass** das Unterteil (4) an seiner Vorderseite (10) eine Griffanordnung (134) mit einem vollständig umgreifbaren Tragegriff (135) aufweist.

9. Beförderungsvorrichtung (1) nach einem der voranstehenden Ansprüche, **dadurch gekennzeichnet, dass** das Unterteil (4) an seinen beiden Längsseiten (9) jeweils einen Radanbringungsabschnitt (136) aufweist, wobei an jedem Radanbringungsabschnitt (136) eines der Räder (11) angebracht ist.

10. Beförderungsvorrichtung (1) nach einem der voranstehenden Ansprüche, **dadurch gekennzeichnet, dass** das Beförderungsfahrzeug (2) oberhalb der Behälter-Befestigungsschnittstelle (6) eine am vertikalen Gestellabschnitt (14) angeordnete Auszuganordnung (150) mit einer Auszugeinheit (151) umfasst, wobei die Auszugeinheit (151) ein ausziehbares Behälter-Aufnahmeelement (152) zur Aufnahme eines kastenförmigen Behälters (80) aufweist.

11. Beförderungsvorrichtung (1) nach einem der voranstehenden Ansprüche, **dadurch gekennzeichnet, dass** die Beförderungsvorrichtung (1) ferner eine/die Auszugeinheit (151) mit einem/dem ausziehbaren Behälter-Aufnahmeelement (152) zur Aufnahme eines kastenförmigen Behälters (80) umfasst, wobei am Unterteil (4) ferner eine Auszug-Befestigungsschnittstelle (137) vorhanden ist, an die die Auszugeinheit (151) befestigbar ist.

12. Beförderungsvorrichtung nach einem der voranstehenden Ansprüche, ferner umfassend den länglichen Arbeitstisch (40), der in einer horizontalen Ausrichtung von einem an dem Beförderungsfahrzeug vorhandenen Abstützabschnitt (27) abgestützt werden kann, um eine stationäre Arbeitsstellung einzunehmen.

## Claims

1. Transport device (1) comprising a transport vehicle (2) and a vertical stack (90) of box-shaped containers (80) coupled together, wherein the transport vehicle (2) comprises
a vehicle body with a bottom part (4) and a vertical frame section (14) extending upwards from the upper side of the bottom part (4), wherein the bottom part (4) has a storage surface (5) and a container attachment interface (6) for attaching, with its lowermost box-shaped container (80), the vertical stack (90) placed on the storage surface (5) to the bottom part (4),
a handle (12) arranged on the vehicle body for moving the transport vehicle (2) into a tilted position, and
two wheels (11) arranged on the bottom part (4) for supporting the transport vehicle (2) in the tilted position relative to a floor and moving the transport vehicle (2) relative to the floor, **characterized in that**
the bottom part (4) has a plurality of stand feet (39, 39A) on its underside and the transport vehicle (2) is adapted to be supported against the floor in the upright position with the stand feet (39, 39A) and not with the wheels (11), wherein
the bottom part (4) comprises in a rearward section (7) a first attachment device (20) of a worktable attachment interface (24) for attaching an elongate worktable (40) in vertical orientation to the transport vehicle (2), wherein the first attachment device (20) comprises a slot (20) and an attachment structure (29) accessible via the slot (20).

2. Transport device (1) according to claim 1, **characterized in that** at least one box-shaped container (80) has a carrying handle (103) on its upper side.

3. Transport device (1) according to claim 1 or claim 2, **characterized in that** at least one stand foot (39A) is adjustable in height.

4. Transport device (1) according to one of the preceding claims, **characterized in that** the bottom part (4) comprises a bottom part body manufactured as an injection-moulded part which provides the storage surface (5).

5. Transport device (1) according to one of the preceding claims, **characterized in that** the container attachment interface (6) comprises a movable coupling element (91), in particular a rotary bolt, which can be moved by user actuation selectively into a locking position or a release position, wherein the coupling element (91) in the locking position engages a first non-movable coupling structure disposed on the lowermost box-shaped container (80) so that the lowermost box-shaped container (80) is secured to the bottom part (4), and in the release position releases the first non-movable coupling structure so that the lowermost box-shaped container (80) is removable from the bottom part (4).

6. Transport device (1) according to one of the preceding claims, **characterized in that** there is a recess (131) in the storage surface (5), the recess (131) providing a container accommodation volume in which an additional container (132) smaller than the box-shaped container (80) can be accommodated.

7. Transport device (1) according to one of the preceding claims, **characterized in that** the bottom part (4) has a U-shaped elevation (133) which surrounds the storage surface (5) and from which the vertical frame section (14) extends upwards.

8. Transport device (1) according to one of the preceding claims, **characterised in that** the bottom part (4) has a handle arrangement (134) on its front side (10) with a completely embraceable carrying handle (135).

9. Transport device (1) according to one of the preceding claims, **characterized in that** the bottom part (4) has a wheel mounting section (136) on each of its two longitudinal sides (9), one of the wheels (11) being mounted on each wheel mounting section (136).

10. Transport device (1) according to one of the preceding claims, **characterised in that** the transport vehicle (2) comprises, above the container attachment interface (6), a pull-out assembly (150) with a pull-out unit (151) arranged on the vertical frame section (14), the pull-out unit (151) having a pull-out container accommodation element (152) for accommodating a box-shaped container (80).

11. Transport device (1) according to one of the preceding claims, **characterised in that** the transport device (1) further comprises a/the pull-out unit (151) with a/the pull-out container accommodation element (152) for accommodating a box-shaped container (80), wherein a pull-out attachment interface (137) to which the pull-out unit (151) can be attached is further provided on the bottom part (4).

12. Transport device according to one of the preceding claims, further comprising the elongate worktable (40) which can be supported in a horizontal orientation by a support section (27) provided on the transport vehicle to assume a stationary working position.

## Revendications

1. Dispositif de transport (1) avec un véhicule de transport (2) et une pile verticale (90) de contenants en forme de caisson (80) accouplés les uns aux autres, dans lequel le véhicule de transport (2) comprend :
un corps de véhicule avec une partie inférieure (4) et une section de bâti verticale (14) s'étendant vers le haut depuis le dessus de la partie inférieure (4), dans lequel la partie inférieure (4) dispose d'une surface de pose (5) et d'une interface de fixation de contenant (6) avec laquelle la pile verticale (90) posée sur la surface de pose (5) avec son contenant en forme de caisson (80) le plus bas peut être fixée à la partie inférieure (4) ,
une poignée (12) disposée sur le corps de véhicule, avec laquelle le véhicule de transport (2) peut être amenée dans une position de basculement, et
deux roues (11) disposées sur la partie inférieure (4), avec lesquelles le véhicule de transport (2) peut être soutenu dans la position de basculement par rapport à un sol et déplacé par rapport au sol, **caractérisé en ce que** la partie inférieure (4) dispose sur sa face inférieure de plusieurs pieds (39, 39A) et le véhicule de transport (2) est réalisé pour s'appuyer par rapport au sol dans une position verticale avec les pieds (39, 39A) et non avec les roues (11), dans lequel
la partie inférieure (4) comprend dans une zone arrière (7) un premier système de fixation (20) d'une interface de fixation de table de travail (24) avec lequel une table de travail allongée (40) peut être montée dans un alignement vertical sur le véhicule de transport (2), dans lequel le premier système de fixation (20) présente une fente (20) et une structure de fixation (29) accessible par la fente (20).

2. Dispositif de transport (1) selon la revendication 1, **caractérisé en ce qu'**au moins un contenant en forme de caisson (80) présente sur sa face supérieure une poignée de transport (103).

3. Dispositif de transport (1) selon la revendication 1 ou 2, **caractérisé en ce qu'**au moins un pied (39A) est réglable en hauteur.

4. Dispositif de transport (1) selon l'une quelconque des revendications précédentes, **caractérisé en ce que** la partie inférieure (4) comprend un corps de partie inférieure fabriqué en tant que pièce moulée par injection qui fournit la surface de pose (5).

5. Dispositif de transport (1) selon l'une quelconque des revendications précédentes, **caractérisé en ce que** l'interface de fixation de contenant (6) comprend un élément d'accouplement (91) mobile, en particulier un verrou tournant, pouvant être amené sélectivement dans une position de verrouillage ou une position de libération par actionnement de l'utilisateur, dans lequel l'élément d'accouplement (91) dans la position de verrouillage est en prise avec une première structure d'accouplement non mobile disposée sur le contenant en forme de caisson (80) le plus bas, de sorte que le contenant en forme de caisson (80) le plus bas soit fixé à la partie inférieure (4), et dans la position de libération libère la première structure d'accouplement non mobile de sorte que le contenant en forme de caisson (80) le plus bas puisse être retiré de la partie inférieure (4).

6. Dispositif de transport (1) selon l'une quelconque des revendications précédentes, **caractérisé en ce qu'**un renfoncement (131), qui fournit un volume de réception de contenant dans lequel peut être logé un contenant supplémentaire (132) qui est plus petit que le contenant en forme de caisson (80),est présent dans la surface de pose (5).

7. Dispositif de transport (1) selon l'une quelconque des revendications précédentes, **caractérisé en ce que** la partie inférieure (4) dispose d'une bosse en forme de U (133) qui entoure la surface de pose (5) et à partir de laquelle la section verticale de bâti (14) s'étend vers le haut.

8. Dispositif de transport (1) selon l'une quelconque des revendications précédentes, **caractérisé en ce que** la partie inférieure (4) présente sur sa face avant (10) un ensemble de poignée (134) avec une poignée de transport (135) entièrement saisissable.

9. Dispositif de transport (1) selon l'une quelconque des revendications précédentes, **caractérisé en ce que** la partie inférieure (4) présente respectivement sur ses deux côtés longitudinaux (9) une section de fixation de roue (136), dans lequel l'une des roues (11) est montée sur chaque section de montage de roue (136).

10. Dispositif de transport (1) selon l'une quelconque des revendications précédentes, **caractérisé en ce que** le véhicule de transport (2) comprend, au-dessus de l'interface de fixation de contenant (6), un ensemble d'extraction (150) disposé sur la section de bâti verticale (14) avec une unité d'extraction (151), dans lequel l'unité d'extraction (151) présente un élément de réception de contenant (152) extractible pour recevoir un contenant en forme de caisson (80).

11. Dispositif de transport (1) selon l'une quelconque des revendications précédentes, **caractérisé en ce que** le dispositif de transport (1) comprend en outre une/l'unité d'extraction (151) avec un/l'élément de réception de contenant (152) extractible pour recevoir un contenant en forme de caisson (80), dans lequel une interface de fixation d'extraction (137), à laquelle l'unité d'extraction (151) peut être fixée, est en outre présente sur la partie inférieure (4).

12. Dispositif de transport selon l'une quelconque des revendications précédentes, comprenant en outre la table de travail allongée (40), qui peut être soutenue dans un alignement horizontal par une section d'appui (27) présente sur le véhicule de transport pour prendre une position de travail fixe.
